# EUROPÄISCHE PATENTSCHRIFT

(11) **EP 4 511 266 B1**
(45) Veröffentlichungstag und Bekanntmachung des Hinweises auf die Patenterteilung: **21.01.2026**
(21) Anmeldenummer: 23718174.8
(22) Anmeldetag: 29.03.2023
(51) Int. Cl.: G05D 1/00, G08G 1/16, B60W 30/08

(54) **VERFAHREN ZUR PRÜFUNG DER VERLETZUNG EINER GRENZE EINES BEFAHRBAREN BEREICHS DURCH EIN FAHRZEUG UND FAHRERASSISTENZSYSTEM**
METHOD FOR MONITORING WHETHER A VEHICLE HAS CROSSED A BOUNDARY OF A ZONE IN WHICH THE VEHICLE CAN DRIVE, AND DRIVER ASSISTANCE SYSTEM
PROCÉDÉ DESTINÉ À SURVEILLER SI UN VÉHICULE A FRANCHI UNE LIMITE D'UNE ZONE DANS LAQUELLE LE VÉHICULE PEUT SE DÉPLACER, ET SYSTÈME D'AIDE À LA CONDUITE

(30) Priorität: 19.04.2022 DE 102022203827
(43) Veröffentlichungstag der Anmeldung: 26.02.2025
(73) Patentinhaber: AUMOVIO Autonomous Mobility Germany GmbH, 85057 Ingolstadt (DE)
(72) Erfinder: ZHU, Qiangqiang, 85057 Ingolstadt (DE); SCHRADER, Moritz, 85057 Ingolstadt (DE); HAHN, Stefan, 85057 Ingolstadt (DE)
(74) Vertreter: Aumovio Corporation
(86) Internationale Anmeldenummer: PCT/DE2023/200068
(87) Internationale Veröffentlichungsnummer: WO 2023/202751

(56) Entgegenhaltungen:
- EP-A1- 3 323 697
- EP-A1- 3 344 519
- CN-A- 102 295 004

## Beschreibung

Die Erfindung betrifft das Gebiet der Fahrerassistenzsysteme von Fahrzeugen. Insbesondere betrifft die Erfindung ein robustes Verfahren zur Prüfung, ob ein von einem Fahrerassistenzsystem geführtes Fahrzeug beim Fahren entlang einer Trajektorie die Grenzen des zulässigen Freiraums verletzt.

Fahrerassistenzsysteme bei Fahrzeugen sind grundsätzlich bekannt. Zudem sind abstandsbasierte Verfahren bekannt, die prüfen, ob das Fahrzeug, das auf einer Trajektorie bewegt werden soll, entlang der gesamten von der Trajektorie beschriebenen Bewegungsbahn den vorgegebenen Abstand zu den Grenzen des befahrbaren Bereichs einhält. Dies erfolgt unter Berücksichtigung der Fahrzeuggeometrie, d.h. insbesondere der Fläche, die durch Projektion der Fahrzeugkarosseriekontur auf die Fahrbahn entsteht.

Des Weiteren sind Verfahren bekannt, die prüfen, ob zwischen dem Fahrkorridor des Fahrzeugs, d.h. dem Bereich, der bei Bewegung des Fahrzeugs entlang der Trajektorie durch Projektion der Fahrzeugkarosseriekontur auf die Fahrbahn überstrichen wird, und den Grenzlinien des befahrbaren Bereichs ein Schnittpunkt entsteht, d.h. ob der Fahrkorridor eine Grenze des befahrbaren Bereichs kreuzt. Bei bekannten Verfahren muss der Schnittpunkt mit der Grenze des befahrbaren Bereichs berechnet werden.

Problematisch bei den bekannten Verfahren ist, dass diese sehr rechenaufwendig sind, da jeweils Gleichungssysteme gelöst werden müssen, um den Abstand des Fahrzeugs zu den Grenzlinien des befahrbaren Bereichs bzw. den Schnittpunkt eines Abschnitts der Fahrzeugkarosseriekontur mit einer Grenzlinie zu bestimmen. Zudem kann nicht immer garantiert werden, dass die Lösung des Gleichungssystems zu reellen Lösungen führt. Wenn keine reellen Lösungen gefunden werden, muss eine weitergehende Überprüfung erfolgen.

Die Druckschrift CN 1 02 295 004 A offenbart ein Verfahren zur Spurverlassenswarnung, das die folgenden Schritte umfasst: Bereitstellen der Zustandsinformation und der Umgebungsinformation der aktuellen Fahrzeugbewegung durch einen Fahrzeugsensor, eine Spurvorhersage mittels eines Fahrverhaltensmodells eines menschlichen Fahrers, Vorhersage des möglichen Fahrspurbereichs eines Fahrzeugs innerhalb einer bestimmten Zeitspanne in der Zukunft durch Kombination mit der Fahrzeugkinematik und einem kinetischen Modell, mit einer Spurverlassenswarnentscheidung, wobei eine Bewegungssicherheit des Fahrzeugs analysiert wird, indem die relative Beziehung zwischen der Berechnungszeit von einer möglichen Fahrspur des Fahrzeugs zu einem Erkennungspunktbereich auf der Fahrspurmarkierungslinie und einer voreingestellten Schwellenwertzeit als ein Index der Spurabweichungswarnung genommen wird.

Die Druckschrift US 2012 / 0 212 612 A1 offenbart eine Spurverlassenswarnvorrichtung zur Ausgabe eines Warnsignals bei der Feststellung des Verlassens einer Fahrspur durch ein Fahrzeug, wobei die Spurverlassenswarnvorrichtung bei einer fehlenden Spurmarkierung diese abschätzt.

Die Druckschrift KR 10 1 406 316 B1 lehrt eine Vorrichtung und ein Verfahren zur Erkennung von Fahrspuren, wobei anhand einer erkannten Fahrspur eine Warnzone innerhalb der Fahrspur beschrieben wird. Wenn das Fahrzeug diese Zone verlässt, wird eine Warnung ausgegeben.

Das Paper von Risack, R., N. Mohler, and W. Enkelmann "A video-based lane keeping assistant" Proceedings of the IEEE intelligent vehicles symposium 2000 (Cat. No. 00TH8511) lehrt unterschiedliche Methoden, wie ein Verlassen der Spur erfasst werden kann. Eine dieser Methoden ist die Berechnung der "time to line crossing" ausgehend von der aktuellen Trajektorie und Fahrdynamik. Es werden unterschiedliche Fahrdynamikmodelle zur Berechnung verwendet, wobei hierbei die Schnittpunkte der Fahrdynamikkurve mit der Spurmarkierung berechnet werden.

Aus EP 3 344 519 A1 ist eine Vorrichtung zum Rückwärtsfahren einer Gelenkfahrzeugkombination bekannt, die mindestens zwei Fahrzeugeinheiten umfasst, die über mindestens ein Knickgelenk miteinander verbunden sind. Ferner umfasst die Vorrichtung Mittel zum Aufzeichnen und Speichern einer Vielzahl von globalen Positionen einer lokalen Position der Fahrzeugkombination, mindestens einen an der Fahrzeugkombination angebrachten Sensor zum Aufzeichnen von Daten, die eine Vielzahl von Eigenschaften der Umgebung darstellen, und eine Steuereinheit, die angeordnet ist, um einen Satz von globalen Positionen, die aufgezeichnet werden, wenn sich die Fahrzeugkombination vorwärts bewegt, und einen Satz von Daten, die Eigenschaften der Umgebung darstellen, die während der Vorwärtsbewegung aufgezeichnet werden. Ferner werden Fahrzeugsteuerungs-Eingangsdaten zur Steuerung der Fahrzeugkombination während einer Rückwärtsbewegung der Fahrzeugkombination bestimmt, wobei die Steuereinheit angepasst ist, um Eigenschaften der Umgebung, einschließlich Asphalt und Gras, durch eine Signalanalysefunktion in Form einer Bildanalysefunktion zu identifizieren, und wobei die Steuereinheit angeordnet ist, um eine überstrichene Fläche der Fahrzeugkombination auf der Grundlage von mindestens dem Satz von globalen Positionen zu bestimmen.

Die EP 3 323 697 A1 betrifft ein Verfahren zum Planen einer Trajektorie zum autonomen Parken eines Kraftfahrzeugs in einer Parkplatzumgebung mit mehreren Parkplätzen unter weitgehendem Verzicht auf aufwändige Sensorik zu ermöglichen, wobei eine Abmessungen der des Kraftfahrzeugs betreffenden geometrischen Figur durch eine erste Erfassungseinrichtung der Parkplatzumgebung erfasst wird, eine Parkplatzbelegung der mehreren Parkplätze durch eine zweite Erfassungseinrichtung der Parkplatzumgebung erfasst wird, und ein befahrbarer Bereich oder Sperrbereich der Parkplatzumgebung anhand einer Karte der Parkplatzumgebung ermittelt wird und anhand der erfassten Parkplatzbelegung durch ein Steuergerät der Parkplatzumgebung die Trajektorie zum Bewegen der geometrischen Figur auf einen freien Parkplatz repräsentierenden Bereich der Karte durch das Steuergerät der Parkplatzumgebung geplant wird.

Ausgehend hiervon ist es Aufgabe der Erfindung, ein Verfahren anzugeben, das eine zuverlässige Prüfung der Verletzung einer Grenze eines befahrbaren Bereichs mit geringem Rechenaufwand ermöglicht.

Die Aufgabe wird durch ein Verfahren mit den Merkmalen des unabhängigen Patentanspruchs 1 gelöst. Bevorzugte Ausführungsformen sind Gegenstand der Unteransprüche. Ein Fahrerassistenzsystem, das dazu ausgebildet ist, die Verletzung einer Grenze eines befahrbaren Bereichs zu prüfen, ist Gegenstand des nebengeordneten Patentanspruchs 8.

Gemäß einem ersten Aspekt wird ein Verfahren zur Prüfung der Verletzung einer Grenze eines befahrbaren Bereichs durch ein Fahrzeug offenbart. Das Fahrzeug weist ein Fahrerassistenzsystem auf, das dazu ausgebildet ist, das Fahrzeug entlang einer Trajektorie automatisiert oder teilautomatisiert zu bewegen. Zudem ist das Fahrerassistenzsystem dazu konfiguriert, das Prüfverfahren mit den folgenden Schritten zu vollziehen:
Zunächst werden Informationen zu mindestens einer Grenzlinie des befahrbaren Bereichs empfangen. Somit wird der befahrbare Bereich insbesondere durch die mindestens eine Grenzlinie, besonders bevorzugt durch eine linke und eine rechte Grenzlinie, welche zueinander beabstandet sind und beispielsweise eine Fahrspur definieren, festgelegt. Die Informationen können von einer Umgebungserfassungseinheit des Fahrzeugs bereitgestellt werden, die ein Umfeldmodell der Umgebung um das Fahrzeug herum erstellt. Die Grenzlinie kann beispielsweise eine Grenze im Freiraum festlegen, die insbesondere eine Fahrspur definiert, auf der das Fahrzeug bewegt werden soll. Alternativ kann die Grenzlinie ein Umgebungsobjekt im Umfeld des Fahrzeugs charakterisieren.

Vorzugsweise ist die mindestens eine Grenzlinie durch eine Vielzahl von Punkten, d.h. durch einen Linienzug aus mehreren Geraden definiert, wobei sich die Geraden jeweils zwischen zwei benachbarten Punkten erstrecken. Alternativ kann die Grenzlinie auch durch eine stetige Linie gebildet sein.

Zudem werden Informationen zu einem Fahrkorridor des Fahrzeugs empfangen. Der Fahrkorridor ist insbesondere der Bereich, der beim Durchfahren der Trajektorie durch eine Projektion der Fahrzeugkarosseriekontur auf die Fahrbahn überstrichen wird. **In** anderen Worten ist der Fahrkorridor insbesondere ein schlauchartiger Bereich zumindest mit einer Breite gleich der Fahrzeugbreite (im Falle des Einbeziehens eines Sicherheitspuffers auch breiter).

Es wird ein erster und ein zweiter Punkt auf der mindestens einen Grenzlinie des befahrbaren Bereichs selektiert. Bei Empfangen von Informationen zu zwei Grenzlinien, insbesondere zu einer linken und rechten Grenzlinie des befahrbaren Bereichs, werden vorzugsweise auf den zwei Grenzlinien jeweils ein erster und zweiter Punkt selektiert. Der erste Punkt ist dabei in Fahrtrichtung des Fahrzeugs hinter dem zweiten Punkt auf derselben Grenzlinie gelegen. Durch die Punkte wird damit ein Abschnitt der mindestens einen Grenzlinie definiert, bezogen auf den die Prüfung erfolgt, ob eine Verletzung der Grenzlinie beim Durchfahren der Trajektorie vorliegt oder nicht.

Zudem wird mindestens oder genau ein dritter Punkt festgelegt, der auf dem Rand des Fahrkorridors des Fahrzeugs liegt. Der Fahrkorridor des Fahrzeugs kann entweder durch stetige Linien definiert sein oder aber durch eine Vielzahl von an unterschiedlichen Positionen entlang der Trajektorie positionierten Fahrzeugkarosseriekonturen. Die Fahrzeugkarosseriekontur kann beispielsweise durch ein Polygon, insbesondere durch ein Rechteck gebildet sein, das die Fahrzeugkarosseriekontur bei Draufsicht auf das Fahrzeug von oben zumindest näherungsweise beschreibt. Die Fahrzeugkarosseriekontur kann größer gewählt sein als die tatsächliche Fahrzeugkarosseriekontur, um einen Sicherheitspuffer zu erhalten.

Anschließend wird zumindest zeitweise die Lage des mindestens oder genau einen dritten Punktes relativ zur Linie zwischen dem ersten und zweiten Punkt, die auf derselben Grenzlinie liegen, ermittelt, und zwar indem zumindest für den dritten Punkt eine Rotationsrichtungsbestimmung durchgeführt wird. Weiterhin wird geprüft, ob die bestimmte Rotationsrichtung im oder gegen den Uhrzeigersinn orientiert ist. **In** anderen Worten werden die drei Punkte, von denen zwei auf derselben Grenzlinie liegen und einer einen Punkt des Fahrkorridors des Fahrzeugs angibt, durch einen Linienzug verbunden. Die Prüfung der Rotationsrichtung ergibt sich insbesondere, wenn ein Durchlauf des Linienzugs derart erfolgt, dass die Strecke zwischen den beiden Punkten auf der Grenzlinie des befahrbaren Bereichs in Fahrtrichtung durchlaufen wird.

**In** einem nächsten Schritt wird basierend auf der geprüften Rotationsrichtung des mindestens dritten Punkts geprüft, ob eine Verletzung der Grenze des befahrbaren Bereichs durch das Fahrzeug vorliegt.

Das Verfahren hat den technischen Vorteil, dass durch das auf der Rotationsrichtung basierende Prüfungsverfahren eine technisch einfache Prüfung mit geringem Rechenaufwand möglich wird, da das Prüfungsverfahren punktebasiert ist, so dass recheneffiziente Methoden der Vektorrechnung eingesetzt werden können und damit ein Lösen eines rechenaufwendigen Gleichungssystems nicht nötig ist. Zudem ist es mittels des Prüfungsverfahrens möglich, festzustellen, ob der befahrbare Bereich bereits vollständig verlassen wurde, was die Sicherheit des Prüfverfahrens verbessert.

Gemäß einem Ausführungsbeispiel wird die Rotationsrichtungsbestimmung durchgeführt, indem für den dritten Punkt beim Durchlaufen eines Linienzuges, der ausgehend vom ersten Punkt über den zweiten Punkt zum dritten Punkt gebildet wird, eine Rotationsrichtung bestimmt wird. Eine Nichtübereinstimmung der bestimmten Rotationsrichtung mit einer erwarteten Rotationsrichtung zeigt insbesondere an, dass eine Grenzüberschreitung vorliegt.

Gemäß einem Ausführungsbeispiel ist der dritte Punkt ein Fahrzeugeckpunkt eines Polygons, insbesondere eines Vierecks, im Speziellen eines Rechtecks, das die Fahrzeugkarosseriekontur des Fahrzeugs nachbildet. Somit wird die Fahrzeugkarosseriekontur insbesondere durch ein Rechteck mit vier Ecken approximiert.

Gemäß einem Ausführungsbeispiel wird die mindestens oder genau eine Grenzlinie des befahrbaren Bereichs durch mehrere zueinander beabstandete Punkte approximiert und werden Punktepaare der Grenzlinie zeitlich nacheinander als erste und zweite Punkte ausgewählt und für die Ermittlung der Rotationsrichtung und die Prüfung, ob eine Verletzung der Grenze des befahrbaren Bereichs vorliegt, verwendet. Dadurch kann allein basierend auf Punktepaaren der Grenzlinie ohne ein Gleichungssystem iterativ die Prüfung der Verletzung des befahrbaren Bereichs vollzogen werden.

Gemäß einem Ausführungsbeispiel weist der befahrbare Bereich eine linke und eine rechte Grenzlinie auf, die zueinander beabstandet sind und eine Fahrspur definieren. Die Fahrzeugkarosseriekontur wird durch ein Polygon mit zwei linken und zwei rechten Fahrzeugeckpunkten approximiert. Für die linken Fahrzeugeckpunkte wird zumindest zeitweise die Lage zumindest der beiden linken Fahrzeugeckpunkte relativ zur Linie zwischen dem ersten und zweiten Punkt, die auf der linken Grenzlinie liegen, geprüft. Weiterhin ist bevorzugt, dass zumindest für die beiden linken Fahrzeugeckpunkte jeweils eine Rotationsrichtungsbestimmung durchgeführt wird, und zwar indem für jeden linken Fahrzeugeckpunkt beim Durchlaufen eines Linienzuges, der ausgehend vom ersten Punkt über den zweiten Punkt zum jeweiligen Fahrzeugeckpunkt gebildet wird, eine Rotationsrichtung bestimmt wird. Somit werden insbesondere zumindest zwei Rotationsrichtungen bestimmt. Anschließend wird geprüft, ob die bestimmten Rotationsrichtungen im Uhrzeigersinn orientiert sind. Basierend auf den geprüften Rotationsrichtungen wird geprüft, ob das Fahrzeug die linke Grenzlinie des befahrbaren Bereichs verletzt. Dadurch kann das Verfahren vorteilhaft und mit reduziertem Rechenaufwand auf die Einhaltung der linken Grenzlinie einer vorgegebenen Fahrspur angewandt werden.

Gemäß einem Ausführungsbeispiel weist der befahrbare Bereich eine linke und eine rechte Grenzlinie auf, die zueinander beabstandet sind und eine Fahrspur definieren. Die Fahrzeugkarosseriekontur wird durch ein Polygon mit zwei linken und zwei rechten Fahrzeugeckpunkten approximiert. Für die rechten Fahrzeugeckpunkte wird zumindest zeitweise die Lage relativ zur Linie zwischen dem ersten und zweiten Punkt, die auf der rechten Grenzlinie liegen, geprüft. Weiterhin ist bevorzugt, dass für beide rechte Fahrzeugeckpunkte jeweils eine Rotationsrichtungsbestimmung durchgeführt wird, und zwar indem für jeden rechten Fahrzeugeckpunkt beim Durchlaufen eines Linienzuges, der ausgehend vom ersten Punkt über den zweiten Punkt zum jeweiligen Fahrzeugeckpunkt gebildet wird, eine Rotationsrichtung bestimmt wird. Somit werden insbesondere zumindest zwei Rotationsrichtungen bestimmt. Anschließend wird geprüft, ob die bestimmten Rotationsrichtungen gegen den Uhrzeigersinn orientiert sind. Basierend auf den geprüften Rotationsrichtungen wird geprüft, ob das Fahrzeug die rechte Grenzlinie des befahrbaren Bereichs verletzt. Dadurch kann das Verfahren vorteilhaft und mit reduziertem Rechenaufwand auf die Einhaltung der rechten Grenzlinie einer vorgegebenen Fahrspur angewandt werden.

Gemäß einer bevorzugten Weiterbildung werden die Rotationsrichtungsbestimmung und die Rotationsrichtungsprüfung für mindestens zwei Fahrzeugeckpunkte, besonders bevorzugt für alle Fahrzeugeckpunkte, die die Fahrzeugkarosseriekontur nachbilden, durchgeführt.

Gemäß einem Ausführungsbeispiel bezieht sich die Grenzlinie des befahrbaren Bereichs auf eine Grenzlinie einer Fahrspur- oder Fahrbahnbegrenzung.

Ein weiterer Gegenstand der Erfindung betrifft ein Fahrerassistenzsystem, das zur Prüfung der Verletzung einer Grenze eines befahrbaren Bereichs durch ein Fahrzeug ausgebildet ist. Das Fahrerassistenzsystem umfasst mehrere, insbesondere mindestens zwei um ein Fahrzeug herum verteilt angeordnete Sensoren und eine Recheneinheit zur Verarbeitung der von den Sensoren bereitgestellten Informationen. Die Recheneinheit ist dazu konfiguriert, die folgenden Schritte zu vollziehen:
- Empfangen von Informationen zu mindestens einer Grenzlinie des befahrbaren Bereichs;
- Empfangen von Informationen zu einem Fahrkorridor des Fahrzeugs, wobei der Fahrkorridor der Bereich ist, der beim Durchfahren der Trajektorie durch eine Projektion der Fahrzeugkarosseriekontur auf die Fahrbahn überstrichen wird;

- Selektieren eines ersten und eines zweiten Punkts auf der mindestens einen Grenzlinie des befahrbaren Bereichs, wobei der erste Punkt in Fahrtrichtung des Fahrzeugs hinter dem zweiten Punkt liegt;
- Festlegen mindestens oder genau eines dritten Punktes, der auf dem Fahrzeug liegt;
- Prüfen der Lage zumindest des dritten Punktes relativ zur Linie zwischen dem ersten und zweiten Punkt, dass zumindest für den dritten Punkt eine Rotationsrichtungsbestimmung durchgeführt wird, und dass geprüft, wird, ob die bestimmte Rotationsrichtung im oder gegen den Uhrzeigersinn orientiert ist;
- Ermitteln basierend auf der geprüften Rotationsrichtung des mindestens dritten Punkts, ob das Fahrzeug die mindestens eine Grenzlinie des befahrbaren Bereichs verletzt.

Die Ausdrücke "näherungsweise", "im Wesentlichen" oder "etwa" bedeuten im Sinne der Erfindung Abweichungen vom jeweils exakten Wert um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: beispielhaft eine schematische Draufsichtdarstellung eines Fahrzeugs, das ein Fahrerassistenzsystem mit mehreren Sensoren und einer Recheneinheit aufweist;
- Fig. 2: beispielhaft unterschiedliche Anordnungen von Punkten A, B, C, die bei vorgegebener Umlaufrichtung der Punkte die sich daraus ergebende Rotationsrichtung verdeutlicht;
- Fig. 3: beispielhaft die Bewegung eines Fahrzeugs entlang einer Trajektorie durch ein Paar von Grenzlinien, die eine Fahrspur definieren und die beispielhafte Anwendung des Rotationsrichtungsverfahrens zur Prüfung der Verletzung der Grenzlinien der Fahrspur; und
- Fig. 4: beispielhaft die Bewegung eines Fahrzeugs basierend auf einer Trajektorie entlang einer Fahrspur, wobei eine Verletzung der linken Grenzlinie der Fahrspur auftritt;

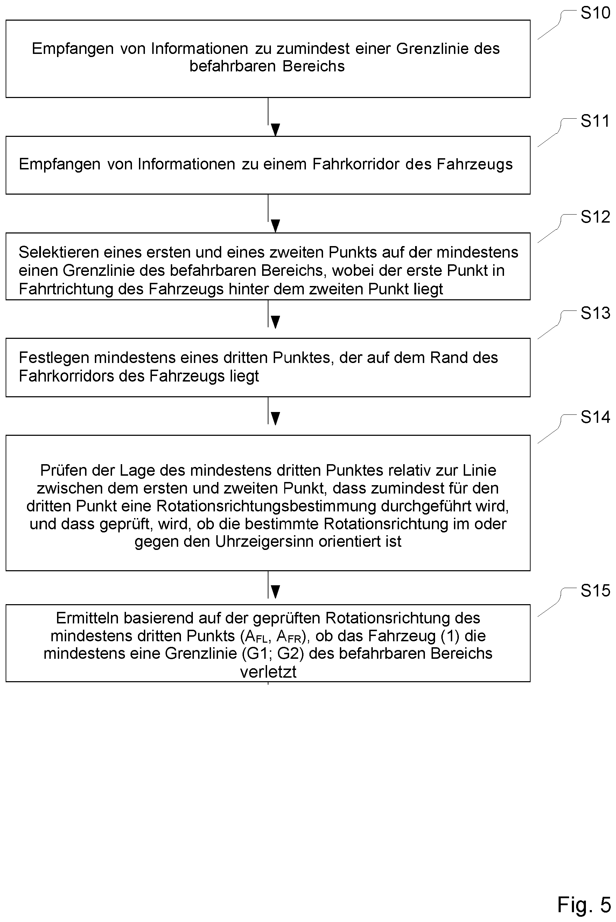

- Fig. 5: ein Ablaufdiagramm, das die Schritte des Verfahrens zur Prüfung der Verletzung einer Grenze eines befahrbaren Bereichs verdeutlicht.

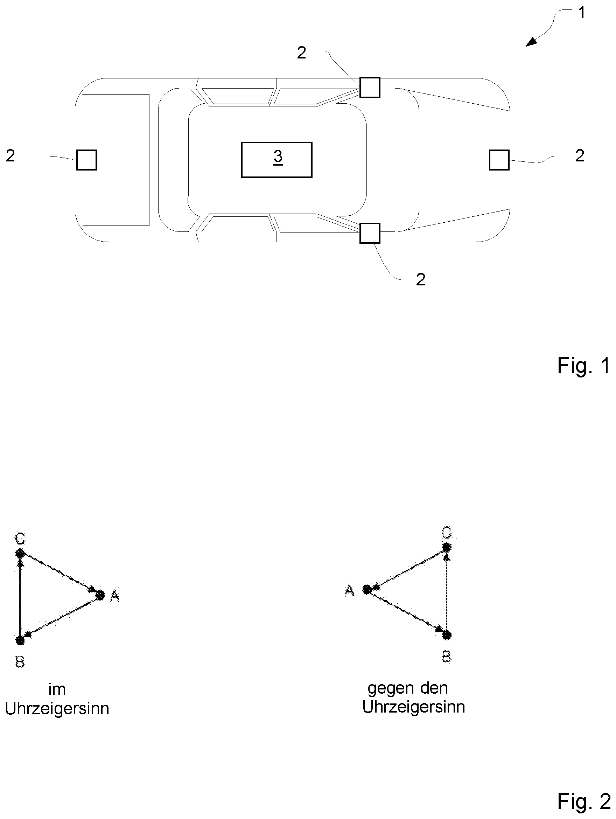

Figur 1 zeigt beispielhaft und schematisch in einer Draufsicht ein Fahrzeug 1, das ein Fahrerassistenzsystem zur Durchführung von automatischen oder teilautomatischen Fahrvorgängen aufweist. Das Fahrerassistenzsystem kann insbesondere dazu ausgebildet sein, von dem Fahrzeug 1 automatisiert bzw. teilautomatisiert befahrbare Bereiche zu erkennen und eine Steuerung des Fahrzeugs 1 derart zu vollziehen, dass das Fahrzeug keine Grenzen des befahrbaren Bereichs verletzt. Der befahrbare Bereich kann beispielsweise eine Fahrspur sein, die eine linke und eine rechte Grenzlinie aufweist. Alternativ kann der befahrbare Bereich durch ein oder mehrere Umgebungsobjekte eingeschränkt sein, mit denen eine Kollision vermieden werden soll.

Das Fahrzeug 1 weist mehrere Sensoren 2 auf, mittels denen der Umgebungsbereich des Fahrzeugs 1 erfassbar ist. Die Sensoren 2 sind mit einer Recheneinheit 3 des Fahrerassistenzsystems gekoppelt, die die Sensorinformationen verarbeitet und Informationen zu zumindest einer Grenzlinie des befahrbaren Bereichs bereitstellt. Durch diese Umgebungserfassung ist das Fahrerassistenzsystem in der Lage, örtliche Bereiche festzulegen, auf denen das Fahrzeug 1 kollisionsfrei geführt werden kann.

Das Fahrerassistenzsystem ist zudem dazu ausgebildet, eine Trajektorie zu bestimmen, auf der das Fahrzeug 1 beim autonom bzw. teilautonom durchgeführten Fahrvorgang bewegt wird. Beim Durchfahren der Trajektorie wird das Fahrzeug auf einem Fahrkorridor bewegt. Der Fahrkorridor ergibt sich aus dem Bereich, der beim Bewegen des Fahrzeugs von der Fahrzeugkarosserie überstrichen bzw. zeitweise belegt wird. Das Fahrzeug weist eine umfangsseitige Fahrzeugkarosseriekontur auf, die sich beispielsweise bei Draufsicht auf das Fahrzeug 1 von oben, d.h. aus der Vogelperspektive ergibt. Die Projektion dieser Fahrzeugkarosseriekontur senkrecht nach unten auf die Fahrbahn definiert den von dem Fahrzeug 1 belegten Bereich der Fahrbahn. Dieser Bereich muss zum Durchfahren zwingend frei sein, um das Fahrzeug 1 kollisionsfrei bewegen zu können. Der Fahrkorridor ist damit schlauchartig und weist eine Breite zumindest gleich der Breite der Fahrzeugkarosseriekontur auf. Der Fahrkorridor kann auch breiter als die Fahrzeugbreite ausgebildet sein, um die Sicherheit des Verfahrens zu erhöhen.

Um feststellen zu können, ob das Fahrzeug 1 eine Grenze des befahrbaren Bereichs verletzt, kann ein rotationsrichtungsbasiertes Prüfverfahren angewendet werden.

Fig. 2 zeigt zwei Möglichkeiten wie ein Triplet von Punkten A, B und C angeordnet sein kann.

Beispielsweise bildet die Linie zwischen dem ersten und zweiten Punkt B und C einen Abschnitt einer Grenzlinie des befahrbaren Bereichs. Der dritte Punkt A kann beispielsweise ein Eckpunkt der Fahrzeugkarosseriekontur des Fahrzeugs 1 sein. Die Punkte A, B und C spannen ein Dreieck auf, im Allgemeinen ein Polygon. Bei dem Durchlaufen des Linienzuges entlang der Punkte in einer vorgegebenen Reihenfolge, beispielsweise vom Punkt B über den Punkt C zum Punkt A kann eine Lageinformation des Punkts A relativ zur Linie zwischen den Punkten B und C ermittelt werden. Ergibt sich beim Durchlaufen des Linienzugs eine Rotationsrichtung im Uhrzeigersinn, kann rückgeschlossen werden, dass der Punkt A rechts von der Linie BC liegt. Im umgekehrten Fall kann rückgeschlossen werden, dass der Punkt A links von der Linie BC liegt, wenn sich beim Durchlaufen des Linienzugs eine Rotationsrichtung entgegen dem Uhrzeigersinn ergibt (rechte Darstellung der Fig. 2).

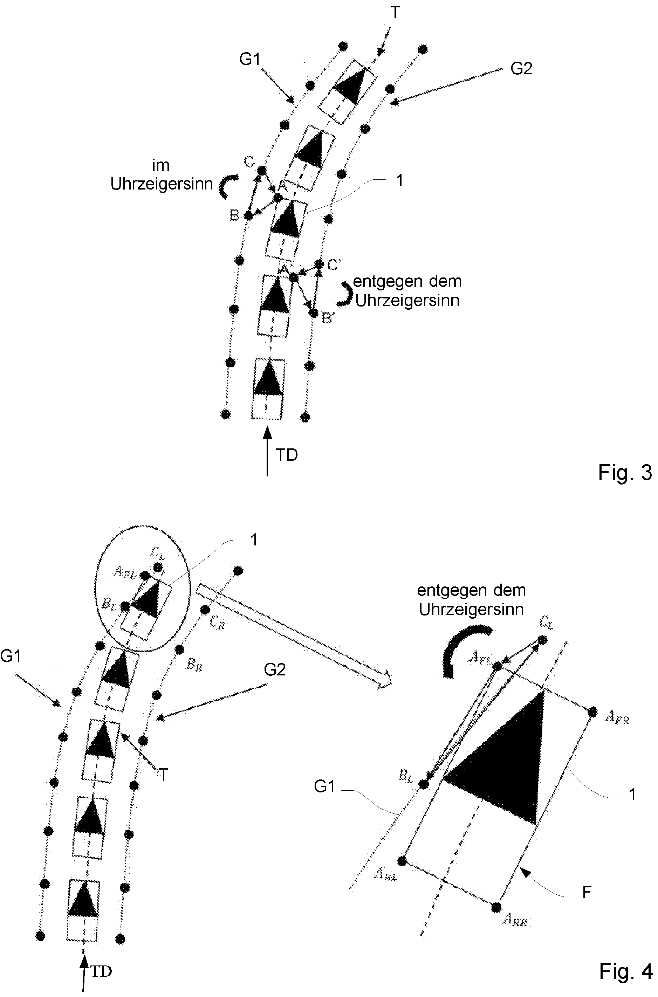

Fig. 3 zeigt ein Anwendungsbeispiel des beschriebenen Verfahrens, bei dem das Fahrzeug 1 auf einer Trajektorie T in Fahrtrichtung TD auf einer Fahrspur bewegt wird, die durch eine linke Grenzlinie G1 und eine rechte Grenzlinie G2 definiert wird. Die Grenzlinien G1, G2 können durch diskrete Punkte nachgebildet werden, die zueinander beabstandet sind. In dem Ausführungsbeispiel gemäß Fig. 3 sind die Punkte B und C zwei Punkte der linken Grenzlinie G1 und die Punkte B' und C' sind zwei Punkte der rechten Grenzlinie G2.

Die Fahrzeugkarosseriekontur des Fahrzeugs 1 ist durch ein Rechteck nachgebildet. Die Größe des Rechtecks ist derart gewählt, dass alle Bereiche des Fahrzeugs 1 innerhalb dieser Fahrzeugkarosseriekontur liegen, beispielsweise auch die Seitenspiegel des Fahrzeugs 1.

Um sicherzustellen, dass das Fahrzeug 1 kollisionsfrei auf der Trajektorie T bewegt werden kann, muss geprüft werden, dass der Fahrkorridor des Fahrzeugs 1, der sich aus der Bewegung der Fahrzeugkarosseriekontur entlang der Trajektorie T ergibt, keinen Schnittpunkt mit der den Grenzlinien G1, G2 aufweist. Der Fahrkorridor des Fahrzeugs 1 kann insbesondere ein schlauchartiger Bereich sein, der innerhalb der Grenzlinien G1, G2 liegen muss, um die Kollisionsfreiheit der Trajektorie T zu garantieren.

Die Prüfung der Kollisionsfreiheit der Trajektorie T kann iterativ basierend auf diskreten Fahrzeugpositionen des Fahrzeugs 1 erfolgen, wie dies in Fig. 3 durch die Vielzahl von Rechtecken angedeutet ist, die das Fahrzeug 1 repräsentieren.

An einer definierten Fahrzeugposition ist zu prüfen, ob die linke Fahrzeugkonturlinie sich rechts von der linken Grenzlinie G1 und sich die rechte Fahrzeugkonturlinie links von der rechten Grenzlinie G2 befindet. Diese Prüfung kann im gezeigten Ausführungsbeispiel anhand der vorderen linken und hinteren linken Ecke bzw. der vorderen rechten und der hinteren rechten Ecke erfolgen. Mehr im Detail muss geprüft werden, ob die vordere linke und hintere linke Ecke in Bezug auf die linke Grenzlinie G1 die gleiche Lage haben, d.h. beide rechts von der linken Grenzlinie G1 liegen. Analoges gilt für die vordere rechte und hintere rechte Ecke in Bezug auf die rechte Grenzlinie G2. Auch diese beiden Ecken müssen relativ zur rechten Grenzlinie G2 die gleiche Lage haben, d.h. beide müssen links von der rechten Grenzlinie G2 liegen.

Bei dieser Prüfung wird beispielsweise ein Punktepaar der linken Grenzlinie G1 der Fahrspur bestimmt, das in der Nähe der linken Fahrzeugkonturlinie liegt. Dies sind im gezeigten Ausführungsbeispiel die Punkte B und C. Die vordere linke Ecke des Fahrzeugs 1 ist mit dem Punkt A bezeichnet. Für den Linienzug aus der Punktefolge B-C-A ergibt sich eine Rotationsrichtung im Uhrzeigersinn.

Die gleiche Prüfung wird nun für die hintere linke Ecke des Fahrzeugs 1 relativ zu den Punkten B und C vollzogen. Wird der Polygonlinienzug von dem Punkt B nach C über die hintere linke Ecke zurück zu B durchlaufen, ergibt sich ebenfalls eine Rotationsrichtung im Uhrzeigersinn. Damit ergibt die Prüfung, dass beide Eckpunkte der linken Fahrzeugkonturlinie auf derselben Seite der linken Grenzlinie G1 liegen, d.h. die linke Fahrzeugkonturlinie nicht die linke Grenzlinie G1 kreuzt, d.h. Kollisionsfreiheit mit der linken Grenzlinie G1 vorliegt. Zudem kann festgestellt werden, dass beide Eckpunkte der linken Fahrzeugkonturlinie rechts von der linken Grenzlinie G1 liegen.

Analoge Prüfung erfolgt bezüglich der beiden Eckpunkte der rechten Fahrzeugkonturlinie relativ zur rechten Grenzlinie G2.

Wie in Fig. 3 gezeigt, ist auch die rechte Grenzlinie G2 durch eine Vielzahl von Punkten repräsentiert, wobei die Punkte B' und C' eine Linie definieren, die ein Teilstück der rechten Grenzlinie G2 bildet. Um feststellen zu können, ob das Fahrzeug 1 beim Durchfahren des Fahrkorridors diese rechte Grenzlinie G2 nicht durchquert, wird der vorbeschriebene Algorithmus in analoger Weise für die Eckpunkte der rechten Fahrzeugkonturlinie vollzogen. So wird für die vordere rechte Ecke der Fahrzeugkonturlinie A' und des sich daraus ergebenden Linienzug B'-C'-A' die Rotationsrichtung bestimmt, die sich beim Durchlaufen des Polygonlinienzugs mit der vorbeschriebenen Laufrichtung ergibt. Diese ist im gezeigten Ausführungsbeispiel entgegen dem Uhrzeigersinn.

Eine ähnliche Prüfung wird nun für die hintere rechte Ecke des Fahrzeugs 1 relativ zu den Punkten B' und C' vollzogen. Wird der Polygonlinienzug von dem Punkt B' nach C' über die hintere rechte Ecke des Fahrzeugs 1 zurück zu B' durchlaufen, ergibt sich ebenfalls eine Rotationsrichtung entgegen dem Uhrzeigersinn. Damit ergibt die Prüfung, dass beide Eckpunkte der rechten Fahrzeugkonturlinie auf derselben Seite der rechten Grenzlinie G2 liegen, d.h. die rechte Fahrzeugkonturlinie nicht die rechte Grenzlinie G2 kreuzt und damit Kollisionsfreiheit mit der rechten Grenzlinie G2 vorliegt. Zudem kann festgestellt werden, dass beide Eckpunkte der rechten Fahrzeugkonturlinie links von der rechten Grenzlinie G2 liegen.

Die vorbeschriebenen Prüfschritte werden vorzugsweise iterativ für mehrere Fahrzeugpositionen entlang des Fahrkorridors und für unterschiedliche Abschnitte (definiert durch Paare von Punkten B-C bzw. B'-C') der Grenzlinien G1 und G2 vollzogen, um die Kollisionsfreiheit der Trajektorie T zu garantieren.

Fig. 4 zeigt ein Beispiel, bei dem die Trajektorie T derart bestimmt ist, dass der Fahrkorridor des Fahrzeugs 1 in dem mit dem Oval gekennzeichneten Bereich die linke Grenzlinie G1 kreuzt und dadurch eine Verletzung einer Grenze des befahrbaren Bereichs auftritt.

Jede Nichtübereinstimmung mit der erwarteten Rotationsrichtung zeigt insbesondere an, dass eine Grenzüberschreitung vorliegt. Bei diesem Ausführungsbeispiel sind die erwarteten Rotationsrichtungen für den Linienzug der jeweiligen Fahrzeugeckpunkte A_{FL}, A_{RL}, A_{FR}, A_{RR} wie folgt:

| Geordnete Punktefolge des Linienzugs | Erwartete Rotationsrichtung |
|---|---|
| (*vorderer linker Fahrzeugeckpunkt A_{FL}, B_{L}, C_{L}*) | Im Uhrzeigersinn |
| *(hinterer linker Fahrzeugeckpunkt A_{RL}*, *B_{L}, C_{L}*) | Im Uhrzeigersinn |
| *(vorderer rechter Fahrzeugeckpunkt A_{FR}, B_{R}, C_{R}*) | Entgegen dem Uhrzeigersinn |
| *(hinterer rechter Fahrzeugeckpunkt A_{RR}, B_{R}, C_{R}*) | Entgegen dem Uhrzeigersinn |

Der Abschnitt der Grenzlinie G1 im Bereich des Fahrzeugs 1 wird durch die Punkte B_{L} und C_{L} definiert. Die vordere linke Ecke des Fahrzeugs 1 ist als Punkt A_{FL} bezeichnet. Für den Linienzug aus der Punktefolge B_{L}- C_{L}- A_{FL} ergibt sich eine Rotationsrichtung entgegen dem Uhrzeigersinn. Bei Anwendung des vorgeschlagenen Verfahrens auf die hintere linke Ecke des Fahrzeugs 1, die als Punkt A_{RL} bezeichnet ist, in Bezug auf die Grenzlinie G1, die wiederum durch die Punkte B_{L} und C_{L} definiert wird, ergibt sich beim Durchlaufen des Linienzuges entlang der Punkte B_{L}- C_{L}- A_{RL} eine Rotationsrichtung im Uhrzeigersinn. Da die Rotationsrichtungen für die vordere und hintere Ecke unterschiedlich sind, kann durch das vorgeschlagene Verfahren eine Verletzung der Grenzlinie G1 erkannt werden.

Um zu erkennen, dass das Fahrzeug 1 nicht völlig außerhalb des befahrbaren Bereichs liegt, kann es sinnvoll sein, in jedem Zyklus oder in größeren Zeitintervallen zu überprüfen, wie die Lage der linken bzw. rechten Eckpaare der Fahrzeugkonturlinie relativ zu zumindest einer Grenzlinie G1, G2 liegen. Für den Fall, dass sich beispielsweise für die linken Ecken der Fahrzeugkonturlinie des Fahrzeugs 1 relativ zu der Linie, die durch die Punkte B_{L} und C_{L} festgelegt wird, eine Rotationsrichtung entgegen dem Uhrzeigersinn ergibt und diese Rotationsrichtung indiziert, dass die linken Ecken der Fahrzeugkarosseriekontur links von der linken Grenzlinie G1 liegen, kann daraus gefolgert werden, dass sich das Fahrzeug 1 an diesem Punkt der Trajektorie T bereits außerhalb des befahrbaren Bereichs befindet und damit eine Verletzung der Grenze des befahrbaren Bereichs vorliegt.

## Patentansprüche

1. Computerimplementiertes Verfahren zur Prüfung der Verletzung einer Grenze eines befahrbaren Bereichs durch ein Fahrzeug (1), das sich entlang einer Trajektorie (T) bewegt, wobei das Verfahren die folgenden Schritte umfasst:
a) Empfangen von Informationen zu mindestens einer Grenzlinie (G1, G2) des befahrbaren Bereichs (S10);
b) Empfangen von Informationen zu einem Fahrkorridor des Fahrzeugs (1) (S11);
**dadurch gekennzeichnet, dass**
das Verfahren ferner folgende Schritte umfasst:
c) Selektieren eines ersten und eines zweiten Punkts (B, C, B', C') auf der mindestens einen Grenzlinie (G1, G2) des befahrbaren Bereichs, wobei der erste Punkt (B, B') in Fahrtrichtung (TD) des Fahrzeugs (1) hinter dem zweiten Punkt (C, C') liegt (S12);
d) Festlegen mindestens eines dritten Punktes (A, A', A_{FL}, A_{FR}, A_{LR}, A_{RR}), der auf dem Rand des Fahrkorridors des Fahrzeugs (1) liegt (S13);
e) Prüfen der Lage des mindestens dritten Punktes (A, A', A_{FL}, A_{FR}, A_{LR}, A_{RR}) relativ zur Linie zwischen dem ersten und zweiten Punkt (B, C, B', C', B_{L}, C_{L}), dass zumindest für den dritten Punkt (A, A', A_{FL}, A_{FR}, A_{LR}, A_{RR}) eine Rotationsrichtungsbestimmung durchgeführt wird, und dass geprüft, wird, ob die bestimmte Rotationsrichtung im oder gegen den Uhrzeigersinn orientiert ist (S14);
f) Ermitteln basierend auf der geprüften Rotationsrichtung des mindestens dritten Punkts (A, A', A_{FL}, A_{FR}, A_{LR}, A_{RR}), ob das Fahrzeug (1) die mindestens eine Grenzlinie (G1, G2) des befahrbaren Bereichs verletzt (S15).

2. Verfahren nach Anspruch 1, **dadurch gekennzeichnet, dass** die Rotationsrichtungsbestimmung durchgeführt wird, indem für den dritten Punkt (A, A') beim Durchlaufen eines Linienzuges, der ausgehend vom ersten Punkt (B, B') über den zweiten Punkt (C, C') zum mindestens dritten Punkt (A, A') gebildet wird, eine Rotationsrichtung bestimmt wird.

3. Verfahren nach Anspruch 1 oder 2, **dadurch gekennzeichnet, dass** die zumindest eine Grenzlinie (G1, G2) des befahrbaren Bereichs durch mehrere zueinander beabstandete Punkte approximiert wird und dass Punktepaare der Grenzlinie zeitlich nacheinander als erste und zweite Punkte (B, C, B', C') ausgewählt und für die Ermittlung der Rotationsrichtung und die Prüfung, ob eine Verletzung der Grenze des befahrbaren Bereichs vorliegt, verwendet werden.

4. Verfahren nach einem der vorhergehenden Ansprüche, **dadurch gekennzeichnet, dass** der mindestens dritte Punkt (A, A', A_{FL}, A_{FR}, A_{LR}, A_{RR}) ein Fahrzeugeckpunkt eines Polygons ist, das die Fahrzeugkarosseriekontur des Fahrzeugs (1) nachbildet.

5. Verfahren nach einem der vorhergehenden Ansprüche, **dadurch gekennzeichnet, dass** der befahrbare Bereich eine linke und eine rechte Grenzlinie (G1, G2) aufweist, die zueinander beabstandet sind und eine Fahrspur definieren, dass die Fahrzeugkarosseriekontur durch ein Polygon mit zwei linken und zwei rechten Fahrzeugeckpunkten approximiert wird und dass zumindest zeitweise die Lage zumindest der beiden linken Ecken relativ zur Linie zwischen dem ersten und zweiten Punkt, die auf der linken Grenzlinie (G1) liegen, geprüft wird, dass zumindest für die beiden linken Fahrzeugeckpunkte jeweils eine Rotationsrichtungsbestimmung durchgeführt wird, und zwar indem für jeden linken Fahrzeugeckpunkt beim Durchlaufen eines Linienzuges, der ausgehend vom ersten Punkt über den zweiten Punkt zum jeweiligen Fahrzeugeckpunkt gebildet wird, eine Rotationsrichtung bestimmt wird und dass geprüft, wird, ob die beiden Rotationsrichtungen im Uhrzeigersinn orientiert sind.

6. Verfahren nach einem der vorhergehenden Ansprüche, **dadurch gekennzeichnet, dass** der befahrbare Bereich eine linke und eine rechte Grenzlinie (G1, G2) aufweist, die zueinander beabstandet sind und eine Fahrspur definieren, dass die Fahrzeugkarosseriekontur durch ein Polygon mit zwei linken und zwei rechten Fahrzeugeckpunkten approximiert wird und dass zumindest zeitweise die Lage der beiden rechten Fahrzeugeckpunkte relativ zur Linie zwischen dem ersten und zweiten Punkt, die auf der rechten Grenzlinie (G2) liegen, geprüft wird, dass für beide rechte Fahrzeugeckpunkte jeweils eine Rotationsrichtungsbestimmung durchgeführt wird, und zwar indem für jeden rechten Fahrzeugeckpunkt beim Durchlaufen eines Linienzuges, der ausgehend vom ersten Punkt über den zweiten Punkt zum jeweiligen Fahrzeugeckpunkt gebildet wird, eine Rotationsrichtung bestimmt wird und dass geprüft, wird, ob die beiden Rotationsrichtungen gegen den Uhrzeigersinn orientiert sind.

7. Verfahren nach einem der vorhergehenden Ansprüche, **dadurch gekennzeichnet, dass** die Rotationsrichtungsbestimmung und die Rotationsrichtungsprüfung für alle Fahrzeugeckpunkte, die die Fahrzeugkarosseriekontur nachbilden, durchgeführt werden.

8. Fahrerassistenzsystem, das zur Prüfung der Verletzung einer Grenze eines befahrbaren Bereichs durch ein Fahrzeug (1) ausgebildet ist, wobei das Fahrerassistenzsystem mehrere um ein Fahrzeug (1) herum verteilt angeordnete Sensoren (2) und eine Recheneinheit (3) zur Verarbeitung der von den Sensoren (2) bereitgestellten Informationen umfasst, wobei die Recheneinheit (3) dazu konfiguriert ist, die folgenden Schritte zu vollziehen:
a) Empfangen von Informationen zu mindestens einer Grenzlinie des befahrbaren Bereichs;
b) Empfangen von Informationen zu einem Fahrkorridor des Fahrzeugs (1), wobei der Fahrkorridor der Bereich ist, der beim Durchfahren der Trajektorie (T) durch eine Projektion der Fahrzeugkarosseriekontur (F) auf die Fahrbahn überstrichen wird (S11);
**dadurch gekennzeichnet, dass**
das Verfahren ferner folgende Schritte umfasst:
c) Selektieren eines ersten und eines zweiten Punkts (B, C, B', C') auf der mindestens einen Grenzlinie (G1, G2) des befahrbaren Bereichs, wobei der erste Punkt (B, B') in Fahrtrichtung (TD) des Fahrzeugs (1) hinter dem zweiten Punkt (C, C') liegt;
d) Festlegen eines dritten Punkts (A, A', A_{FL}, A_{FR}, A_{LR}, A_{RR}), der auf dem Rand des Fahrkorridors des Fahrzeugs (1) liegt;
e) Prüfen der Lage mindestens des dritten Punktes (A, A', A_{FL}, A_{FR}, A_{LR}, A_{RR}) relativ zur Linie zwischen dem ersten und zweiten Punkt (B, C, B', C'), dass zumindest für den dritten Punkt (A, A', A_{FL}, A_{FR}, A_{LR}, A_{RR}) eine Rotationsrichtungsbestimmung durchgeführt wird, und dass geprüft, wird, ob die bestimmte Rotationsrichtung im oder gegen den Uhrzeigersinn orientiert ist;
f) Ermitteln basierend auf der geprüften Rotationsrichtung des mindestens dritten Punkts (A, A', A_{FL}, A_{FR}, A_{LR}, A_{RR}), ob das Fahrzeug (1) die mindestens eine Grenzlinie (G1, G2) des befahrbaren Bereichs verletzt.

## Claims

1. A computer-implemented method for checking whether a vehicle (1) travelling along a trajectory (T) has violated a boundary of a drivable area, wherein the method comprises the following steps:
a) receiving information on at least one boundary line (G1, G2) of the drivable area (S10);
b) receiving information on a driving corridor of the vehicle (1) (S11);
**characterised in that**
the method further comprises the following steps:
c) selecting a first and a second point (B, C, B', C') on the at least one boundary line (G1, G2) of the drivable area, wherein the first point (B, B') is behind the second point (C, C') in the direction of travel (TD) of the vehicle (1) (S12);
d) defining at least one third point (A, A', A_{FL}, A_{FR}, A_{LR}, A_{RR}) which is located on the edge of the driving corridor of the vehicle (1) (S13);
e) checking the position of the at least third point (A, A', A_{FL}, A_{FR}, A_{LR}, A_{RR}) relative to the line between the first and second points (B, C, B', C', B_{L}, C_{L}) to check that, at least for the third point (A, A', A_{FL}, A_{FR}, A_{LR}, A_{RR}), a rotation direction determination is carried out and that it is checked whether the determined rotation direction is oriented clockwise or counterclockwise (S14);
f) ascertaining, based on the checked rotation direction of the at least third point (A, A', A_{FL}, A_{FR}, A_{LR}, A_{RR}), whether the vehicle (1) violates the at least one boundary line (G1, G2) of the drivable area (S15).

2. The method as claimed in claim 1, **characterised in that** the determination of the rotation direction is carried out by determining a rotation direction for the third point (A, A') when traversing a polyline formed from the first point (B, B') via the second point (C, C') to the at least third point (A, A').

3. The method as claimed in claim 1 or 2, **characterised in that** the at least one boundary line (G1, G2) of the drivable area is approximated by multiple points spaced apart from each other, and **in that** point pairs of the boundary line are selected sequentially as first and second points (B, C, B', C') and used for ascertaining the rotation direction and for checking whether the boundary of the drivable area has been violated.

4. The method as claimed in any of the preceding claims, **characterised in that** the at least third point (A, A', A_{FL}, A_{FR}, A_{LR}, A_{RR}) is a vehicle vertex of a polygon that replicates the vehicle body contour of the vehicle (1).

5. The method as claimed in any one of the preceding claims, **characterised in that** the drivable area has a left and a right boundary line (G1, G2) which are spaced apart from each other and define a driving lane, **in that** the vehicle body contour is approximated by a polygon with two left and two right vehicle vertices, and **in that** the position of at least the two left corners relative to the line between the first and second points, located on the left boundary line (G1), is checked at least intermittently, **in that**, at least for the two left vehicle vertices, a rotation direction is determined in each case, namely by determining a rotation direction for each left vehicle vertex when traversing a polyline formed starting from the first point via the second point to the respective vehicle vertex, and **in that** it is checked whether the two directions of rotation are oriented clockwise.

6. The method as claimed in any one of the preceding claims, **characterised in that** the drivable area has a left and a right boundary line (G1, G2) which are spaced apart from each other and define a driving lane, **in that** the vehicle body contour is approximated by a polygon with two left and two right vehicle vertices, and **in that** the position of the two right vehicle vertices relative to the line between the first and second points, located on the right boundary line (G2), is checked at least intermittently, **in that** for the two right vehicle vertices, a rotation direction is determined in each case, namely by determining a rotation direction for each right vehicle vertex when traversing a polyline formed starting from the first point via the second point to the respective vehicle vertex, and **in that** it is checked whether the two directions of rotation are oriented counterclockwise.

7. The method as claimed in any of the preceding claims, **characterised in that** the rotation direction determination and the rotation direction checking are carried out for all vehicle vertices that replicate the vehicle body contour.

8. A driver assistance system designed to check whether a vehicle (1) has violated a boundary of a drivable area, wherein the driver assistance system comprises multiple sensors (2) arranged distributed around a vehicle (1) and a computing unit (3) for processing the information provided by the sensors (2), wherein the computing unit (3) is configured to perform the following steps:
a) receiving information on at least one boundary line of the drivable area;
b) receiving information on a driving corridor of the vehicle (1), wherein the driving corridor is the area covered by a projection of the vehicle body contour (F) onto the road when driving along the trajectory (T) (S11);
**characterised in that**
the method further comprises the following steps:
c) selecting a first and a second point (B, C, B', C') on the at least one boundary line (G1, G2) of the drivable area, wherein the first point (B, B') is behind the second point (C, C') in the direction of travel (TD) of the vehicle (1);
d) defining a third point (A, A', A_{FL}, A_{FR}, A_{LR}, A_{RR}) which is located on the edge of the driving corridor of the vehicle (1);
e) checking the position of at least the third point (A, A', A_{FL}, A_{FR}, A_{LR}, A_{RR}) relative to the line between the first and second point (B, C, B', C'), to verify that, at least for the third point (A, A', A_{FL}, A_{FR}, A_{LR}, A_{RR}), a rotation direction determination is carried out, and verifying whether the determined rotation direction is oriented clockwise or counterclockwise;
f) ascertaining, based on the checked rotation direction of the at least third point (A, A', A_{FL}, A_{FR}, A_{LR}, A_{RR}), whether the vehicle (1) violates the at least one boundary line (G1, G2) of the drivable area.

## Revendications

1. Procédé mis en œuvre par ordinateur pour vérifier si un véhicule (1) se déplaçant le long d'une trajectoire (T) a franchi la limite d'une zone praticable, le procédé comprenant les étapes suivantes :
a) la réception d'informations sur au moins une ligne de limite (G1, G2) de la zone praticable (S10) ;
b) la réception d'informations sur le couloir de circulation du véhicule (1) (S11) ;
**caractérisé en ce que**
la procédure comprend également les étapes suivantes :
c) la sélection d'un premier et d'un deuxième point (B, C, B', C') sur au moins une ligne de limite (G1, G2) de la zone praticable, dans lequel le premier point (B, B') est situé derrière le deuxième point (C, C') dans la direction de déplacement (TD) du véhicule (1) (S12) ;
d) l'identification d'au moins un troisième point (A, A', A_{FL}, A_{FR}, A_{LR}, A_{RR}) qui se trouve sur le bord du couloir de circulation du véhicule (1) (S13) ;
e) la vérification de la position de l'au moins un troisième point (A, A', A_{FL}, A_{FR}, A_{LR}, A_{RR}) par rapport à la ligne entre le premier et le deuxième point (B, C, B', C', B_{L}, C_{L}), qu'au moins pour le troisième point (A, A', A_{FL}, A_{FR}, A_{LR}, A_{RR}), une détermination du sens de rotation est effectuée, et qu'il est vérifié si la direction de rotation déterminée est orientée dans le sens horaire ou antihoraire (S14) ;
f) le fait de déterminer, sur la base du sens de rotation testé de l'au moins un troisième point (A, A', A_{FL}, A_{FR}, A_{LR}, A_{RR}), si le véhicule (1) franchit l'au moins une ligne limite (G1, G2) de la zone praticable (S15).

2. Procédé selon la revendication 1, **caractérisé en ce que** la détermination du sens de rotation est effectuée par la détermination d'un sens de rotation pour le troisième point (A, A') lors de la traversée d'un segment de ligne formé du premier point (B, B') via le deuxième point (C, C') jusqu'à l'au moins un troisième point (A, A').

3. Procédé selon la revendication 1 ou 2, **caractérisé en ce que** l'au moins une ligne limite (G1, G2) de la zone praticable est approchée par plusieurs points espacés les uns des autres et que des paires de points de la ligne limite sont sélectionnées successivement comme premier et deuxième points (B, C, B', C') et utilisées pour déterminer le sens de rotation et vérifier s'il y a franchissement de la limite de la zone praticable.

4. Procédé selon l'une quelconque des revendications précédentes, **caractérisé en ce que** l'au moins un troisième point (A, A', A_{FL}, A_{FR}, A_{LR}, A_{RR}) est un point d'angle de véhicule d'un polygone qui reproduit le contour de la carrosserie du véhicule (1).

5. Procédé selon l'une quelconque des revendications précédentes, **caractérisé en ce que** la zone praticable présente une ligne de délimitation gauche et une ligne de délimitation droite (G1, G2) espacées l'une de l'autre et définissant une voie de conduite, **en ce que** le contour de la carrosserie du véhicule est approximé par un polygone avec deux points d'angle gauche et deux points d'angle droit du véhicule, et que la position d'au moins deux angles gauches par rapport à la ligne reliant les premier et deuxième points, situés sur la ligne de limite gauche (G1), est vérifiée au moins temporairement, **en ce que**, pour au moins les deux points d'angle gauche du véhicule, une détermination du sens de rotation est effectuée par la détermination d'un sens de rotation pour chaque point d'angle gauche du véhicule lors du parcours d'un segment de ligne formé à partir du premier point via le deuxième point jusqu'au point d'angle respectif du véhicule, et **en ce qu'**il est vérifié si les deux sens de rotation sont orientés dans le sens horaire.

6. Procédé selon l'une quelconque des revendications précédentes, **caractérisé en ce que** la zone praticable présente une ligne de délimitation gauche et une ligne de délimitation droite (G1, G2) espacées l'une de l'autre et définissant une voie de conduite, **en ce que** le contour de la carrosserie du véhicule est approximé par un polygone avec deux points d'angle gauche et deux points d'angle droit du véhicule, et que la position des deux points d'angle droit du véhicule par rapport à la ligne reliant les premier et deuxième points, situés sur la ligne de délimitation droite (G2), est vérifiée au moins temporairement, **en ce que**, pour les deux points d'angle droit du véhicule, une détermination du sens de rotation est effectuée par la détermination d'un sens de rotation pour chaque point d'angle droit du véhicule lors du parcours d'un segment de ligne formé à partir du premier point via le deuxième point jusqu'au point d'angle respectif du véhicule, et **en ce qu'**on vérifie si les deux sens de rotation sont orientés dans le sens antihoraire.

7. Procédé selon l'une quelconque des revendications précédentes, **caractérisé en ce que** la détermination du sens de rotation et la vérification du sens de rotation sont effectuées pour tous les points d'angle du véhicule qui reproduisent le contour de la carrosserie du véhicule.

8. Système d'assistance au conducteur conçu pour vérifier les franchissements, par un véhicule (1), d'une limite d'une zone praticable, dans lequel le système d'assistance au conducteur comprend plusieurs capteurs (2) répartis autour d'un véhicule (1) et une unité de calcul (3) pour traiter les informations fournies par les capteurs (2), dans lequel l'unité de calcul (3) est configurée pour effectuer les étapes suivantes :
a) la réception d'informations sur au moins une ligne de limite de la zone praticable ;
b) la réception d'informations sur un couloir de circulation d'un véhicule (1), dans lequel le couloir de circulation est la zone balayée par une projection du contour de la carrosserie du véhicule (F) sur la chaussée lors du parcours de la trajectoire (T) (S11) ;
**caractérisé en ce que**
la procédure comprend également les étapes suivantes :
c) la sélection d'un premier et d'un deuxième point (B, C, B', C') sur au moins une ligne de limite (G1, G2) de la zone praticable, dans lequel le premier point (B, B') est situé derrière le deuxième point (C, C') dans la direction de déplacement (TD) du véhicule (1) ;
d) l'identification d'un troisième point (A, A', A_{FL}, A_{FR}, A_{LR}, A_{RR}) qui se trouve sur le bord du couloir de circulation du véhicule (1) ;
e) la vérification de la position au moins du troisième point (A, A', A_{FL}, A_{FR}, A_{LR}, A_{RR}) par rapport à la ligne entre le premier et le deuxième point (B, C, B', C'), qu'au moins pour le troisième point (A, A', A_{FL}, A_{FR}, A_{LR}, A_{RR}), une détermination du sens de rotation est effectuée, et qu'il est vérifié si la direction de rotation déterminée est orientée dans le sens horaire ou antihoraire ;
f) le fait de déterminer, sur la base du sens de rotation testé de l'au moins un troisième point (A, A', A_{FL}, A_{FR}, A_{LR}, A_{RR}), si le véhicule (1) franchit l'au moins une ligne limite (G1, G2) de la zone praticable.
